# EUROPÄISCHE PATENTANMELDUNG

(11) **EP 4 119 906 A1**
(43) Veröffentlichungstag der Anmeldung: **18.01.2023**
(21) Anmeldenummer: 21185464.1
(22) Anmeldetag: 14.07.2021
(51) Int. Cl.: G01F 1/66

(54) **CLAMP-ON ULTRASCHALLMESSVORRICHTUNG UND VERFAHREN ZU DEREN KONFIGURATION**

(71) Anmelder: Georg Fischer Rohrleitungssysteme AG, 8201 Schaffhausen (CH)
(72) Erfinder: BECKMANN, Tommy, 78247 Hilzingen (DE); STUMPP, Juergen, 8197 Rafz (CH); BAEUCHLE, Yannic, 8222 Beringen (CH); KLEINBRUCKNER,Philipp, 8262 Ramsen (CH)
(74) Vertreter: Fenner, Seraina

(57) **Zusammenfassung**

Verfahren und Vorrichtung zur Konfiguration einer Clamp-on Ultraschallmessvorrichtung zur Durchflussmessung in Rohrleitungen, wobei die Clamp-on Ultraschallmessvorrichtung mindestens zwei sich entlang der Rohrleitung in einer Ebene oder diagonal gegenüberliegende Ultraschallwandler zur Durchflussmessung aufweist, beinhaltend:
• Manuelles Anbringen der Ultraschallmessvorrichtung an einem Rohrleitungsaussendurchmesser,
• Autonomes Erkennen und Erfassen der Eigenschaften der Rohrleitung gegenüber der Ultraschallmessvorrichtung
• Eruieren von Parametern zur exakten Konfiguration der Ultraschallmessvorrichtung anhand der erkannten Eigenschaften der Rohrleitung,
• Optimieren der Einstellung der Ultraschallvorrichtung aufgrund der ermittelten Parameter,
wobei das autonome Erfassen und Erkennen der Eigenschaften der Rohrleitung mittels eines ermittelten Widerstandswerts aufgrund der Dimension der Rohrleitung und/oder einer Umfangsmessung der Rohrleitung und/oder eines ermittelten Ultraschallwerts erfolgt.

## Beschreibung

Die Erfindung betrifft ein Verfahren zur Konfiguration einer Clamp-on Ultraschallmessvorrichtung und eine Clamp-on Ultraschallmessvorrichtung zur Durchflussmessung in Rohrleitungen, wobei die Clamp-on Ultraschallmessvorrichtung mindestens zwei sich entlang der Rohrleitung in einer Ebene oder diagonal gegenüberliegende Ultraschallwandler zur Durchflussmessung aufweist, beinhaltend:
- Manuelles Anbringen der Ultraschallmessvorrichtung an einen Rohrleitungsaussend urchmesser,
- Autonomes Erkennen und Erfassen der Eigenschaften der Rohrleitung gegenüber der Ultraschallmessvorrichtung,
- Eruieren von Parametern zur exakten Konfiguration der Ultraschallmessvorrichtung anhand der erkannten Eigenschaften der Rohrleitung,
- Optimieren der Einstellung der Ultraschallvorrichtung aufgrund der ermittelten Parameter.

Clamp-on-Durchflussmessgeräte können durch ihre einfache Befestigungsweise an einer Rohrleitung vielseitig eingesetzt werden, sei es in der Prozess- und Automatisierungstechnik aber auch in der Versorgung und Haustechnik findet das Messgerät seine Anwendung. Ein grosser Vorteil dieses Messgeräts besteht darin, dass es eine Durchflussmessung ohne Mediumskontakt durchführen kann und ohne das Rohr zu beschädigen. Des Weiteren kann ein Clamp-on-Durchflussmessgerät mehrfach und an unterschiedlichen Stellen eingesetzt werden.

Bei bisherigen aus dem Stand der Technik bekannten Clamp-on-Durchflussmessgeräten werden die Eigenschaften der Rohrleitung auf die das Clamp-on-Durchflussmessgerät adaptiert wird, manuell eingestellt bzw. die entsprechenden Parameter, die gemäss den Eigenschaften der Rohrleitung am Clamp-on Durchflussmessgerät einzugeben sind. In der Regel können diese Parameter aus einer Tabelle aufgrund der Rohrleitungsdimensionen und dem Material entnommen werden.

Alternativ besteht auch die Möglichkeit über das Scannen eines Strich- oder QR Codes wie auch durch das Scannen der Beschriftung am Rohr mittels Texterkennung die Eigenschaften der Rohrleitung auszulesen und dann die dadurch ermittelten Parameter in das Messgerät einzugeben aufgrund der eine Ultraschallüberprüfung erfolgen kann.

Nachteilig am Stand der Technik ist, dass die Parameter manuell ermittelt und manuell in das Messgerät eingegeben werden müssen, wodurch Fehler entstehen können.

Die DE 10 2018 133 476 A1 offenbart ein Verfahren zur Inbetriebnahme und/oder Überprüfung einer Ultraschall-Durchflussmessstelle, wobei die Geometriedaten der Rohrleitung mittels einer Kamera erfasst werden und die optimale Position des Messgeräts über ein Anzeigegerät dem Bedienpersonal dargestellt wird. Nachteilig hierbei ist, dass hierzu eine Kamera benötigt wird bzw. ein von der Vorrichtung unabhängiges Equipment das gerne vergessen oder verloren gehen kann.

Es ist Aufgabe der Erfindung ein Verfahren und Vorrichtung vorzuschlagen, das ermöglicht die Rohrleitungen auf denen die Vorrichtung befestigt wird autonom zu erkennen.

Diese Aufgabe wird erfindungsgemäss dadurch gelöst, dass das autonome Erfassen und Erkennen der Eigenschaften der Rohrleitung mittels eines ermittelten Widerstandswerts aufgrund der Dimension der Rohrleitung und/oder einer Umfangsmessung der Rohrleitung und/oder eines ermittelten Ultraschallwerts erfolgt.

Das erfindungsgemässe Verfahren zur Konfiguration einer Clamp-on Ultraschallmessvorrichtung zur Durchflussmessung in Rohrleitungen beinhaltet, folgende Schritte:
- Manuelles Anbringen der Ultraschallmessvorrichtung an einem Rohrleitungsaussendurchmesser,
- Autonomes Erkennen und Erfassen der Eigenschaften der Rohrleitung gegenüber der Ultraschallmessvorrichtung,
- Eruieren von Parametern zur exakten Konfiguration der Ultraschallmessvorrichtung anhand der erkannten Eigenschaften der Rohrleitung,
- Optimieren der Einstellung der Ultraschallvorrichtung aufgrund der ermittelten Parameter, wobei das autonome Erfassen und Erkennen der Eigenschaften der Rohrleitung mittels eines ermittelten Widerstandswerts aufgrund der Dimension der Rohrleitung und/oder einer Umfangsmessung der Rohrleitung und/oder eines ermittelten Ultraschallwerts erfolgt.

Die erfindungsgemässe Clamp-on Ultraschallmessvorrichtung zur Durchflussmessung in Rohrleitungen, weist mindestens zwei sich entlang der Rohrleitung in einer Ebene oder diagonal gegenüberliegende Ultraschallwandler zur Durchflussmessung auf. Die erfindungsgemässe Vorrichtung wird manuell am Rohrleitungsaussendurchmesser angebracht. Hierzu wird keine Feinjustierung benötigt, vielmehr wird die Vorrichtung an der Rohrleitung durch festklemmen, dranklippen oder auch daran festspannen montiert. Die Clamp-on Ultraschallmessvorrichtung beginnt dann die Rohrleitung zu erkennen und erfasst deren Eigenschaften. Das heisst, es werden vorzugsweise die Abmasse der Rohrleitung wie Aussen- und/oder Innendurchmesser und/oder Wandstärke durch die erfindungsgemässe Vorrichtung ermittelt. Aufgrund dieser Eigenschaften werden die dazugehörigen Parameter zur genauen Konfiguration und Justierung der erfindungsgemässen Vorrichtung eruiert. Anschliessend erfolgt die Optimierung der Einstellung der Ultraschallvorrichtung aufgrund der Parameter an der Rohrleitung. Diese kann manuell erfolgen, indem das Bedienpersonal die Angaben die die Vorrichtung ihnen bezüglich der genauen Position angibt umsetzt. Es ist jedoch zu bevorzugen, wenn sich die Vorrichtung selbst einstellen kann, um auch hier wieder möglichst alle Schritte autonom durchführen zu lassen. Vorzugsweise optimiert die Ultraschallvorrichtung ihre Einstellung kontinuierlich während sie an der Rohrleitung angeordnet ist.
Das autonome Erfassen und Erkennen der Eigenschaften bzw. Geometriedaten der Rohrleitung an der die erfindungsgemässe Vorrichtung befestigt ist, wird durch das Erfassen und Erkennen eines vorliegenden Widerstands aufgrund der Dimension der Rohrleitung umgesetzt. Das heisst, mittels eines Messgeräts, vorzugsweise eines Potentiometers, das vorzugsweise am Aussenumfang angebracht wird, wird mit dem Messgerät der Durchmesser der Rohrleitung erfasst bzw. abgebildet, worauf sich ein entsprechender Widerstand im Messgerät einstellt, aufgrund dessen die Dimension der Rohrleitung erkannt wird. Dadurch weist jede Rohrleitung bzw. jede Dimension der Rohrleitung ihren eigenen Widerstandswert auf, der mittels der erfindungsgemässen Vorrichtung erfasst und erkannt wird und aufgrund dessen die Parameter bestimmt werden können. Selbstverständlich ist es auch möglich die Dimension des Innendurchmessers und/oder oder der Wandstärke mittels eines Messgeräts zu erfassen, aufgrund dessen sich dann ein Widerstand im Messgerät einstellt. Wobei aufgrund des ermittelten Widerstands erkannt wird, um welche Rohrleitung bzw. Wandstärke und/oder Innendurchmesser es sich handelt und die entsprechenden Parameter ausgegeben werden um eine Ultraschallmessung korrekt durchführen zu können, bzw. sich die erfindungsgemässe Vorrichtung optimal einstellt bzw. einstellen lässt.

Zur Erfassung und Erkennung der Rohrleitung kann auch eine blosse Umfangsmessung erfolgen, die vorzugsweise mit einem Umfangsmessband ausgeführt wird. Hierbei wird das blosse Umfangsmass der Rohrleitung ermittelt, wobei diese Messung mechanisch, optisch oder auch magnetisch erfolgen kann. Dies ist abhängig davon, welches Umfangsmessband eingesetzt wird. Dies ermöglicht es den Aussendurchmesser der Rohrleitung zu ermitteln aufgrund dessen wiederum die Parameter ausgegeben werden.

Als weitere Möglichkeit zum Erfassen und Erkennen der Eigenschaften der Rohrleitung kann ein Ultraschallwert ermittelt werden. Dies kann mittels den bereits an der Vorrichtung angeordneten Ultraschallwandlern erfolgen oder vorzugsweise durch einen weiteren Ultraschallwandler der an der erfindungsgemässen Vorrichtung angeordnet ist. Die ermittelten Ultraschalwerte ermöglichen es, die Rohrleitung bzw. deren Geometriedaten oder auch Materialdaten zu erkennen und die entsprechenden Parameter auszugeben um die Optimierung an der erfindungsgemässen Vorrichtung vorzunehmen.

Es ist vorteilhaft, wenn zur Ermittlung des Widerstandswerts aufgrund der Dimension der Rohrleitung ein Potentiometer eingesetzt wird. Hierzu wird ein Potentiometer, vorzugsweise an der erfindungsgemässen Vorrichtung angeordnet, vorzugsweise am Aussendurchmesser der Rohrleitung. Das Potentiometer ist derart ausgebildet, dass es die Geometrie der Rohrleitung erfasst und abbildet, und zwar derart abbildet, dass aufgrund der Geometrie der Rohrleitung, vorzugsweise des Aussendurchmessers, sich ein entsprechender Widerstand am Potentiometer einstellt. Vorzugsweise durch Elemente, die sich aufgrund der Dimension des Aussendurchmessers zueinander verschieben.

Ebenso ist es denkbar, dass die Umfangmessung mittels eines Umfangmessbands durchgeführt wird. Wobei das Umfangsmessband die Umfangserkennung mechanisch, optisch oder auch magnetisch durchführen kann.

Als weitere Variante besteht die Möglichkeit, die Rohrleitungseigenschaften bzw. Geometrie der Rohrleitung oder Materialeigenschaften mittels eines Ultraschallwerts zu ermitteln, wobei dieser mittels mindestens eines Ultraschallwandlers ermittelt wird. Dazu kann einer der bereits an der erfindungsgemässen Vorrichtung angeordneten Ultraschallwandler eingesetzt werden, es kann aber auch ein weiterer Ultraschallwandler an der Vorrichtung angeordnet werden, der ausschliesslich dazu dient die Rohrleitung zu erkennen bzw. die Wandstärke. Wie bereits erwähnt, besteht vorzugsweise die Möglichkeit, dass die Ultraschallvorrichtung ihre Einstellung kontinuierlich optimiert, während sie an der Rohrleitung angeordnet ist. Dies kann aufgrund konstanter Signalerkennung der Ultraschallwerte und deren Auswertung stattfinden wie auch aufgrund vorgegebener Zeitintervalle, die eine Überprüfung der Ultraschallwerte vorgeben und sich dadurch die Vorrichtung bei Bedarf neu optimiert. Zudem ist es möglich aufgrund einer mehr oder weniger kontinuierlichen Ermittlung und Erfassung der Ultraschallwerte Rückschlüsse auf Ablagerungen zu ziehen, welche ebenfalls eine Optimierung der Vorrichtung an der Rohrleitung bedingen können. Auch diese Optimierung wird vorzugsweise autonom durch die Vorrichtung durchgeführt.
Vorzugsweise ist dieser senkrecht auf den Aussendurchmesser der Rohrleitung gerichtet.

Es ist vorteilhaft, wenn als Eigenschaften der Rohrleitung die Geometriedaten der Rohrleitung erfasst werden, vorzugsweise der Aussendurchmesser, Innendurchmesser und/oder die Wandstärke der Rohrleitung. Aufgrund derer kann genau ausgesagt werden um welche Rohrleitung es sich handelt. Das heisst, die Rohrleitungen haben unterschiedliche Geometriedaten bei unterschiedlichen Materialen und Einsatzbereichen. PE-Rohre weisen dementsprechend andere Standardmasse auf als PVC-Rohre oder andere Kunststoffrohre wie auch Metallrohre oder Betonrohre, wodurch durch die erfassten Geometriedaten genau ausgesagt werden kann, um welche Rohrleitung es sich handelt und die entsprechenden Parameter für die genaue Positionierung der erfindungsgemässen Vorrichtung ausgegeben werden können.

Das erfindungsgemässe Verfahren kann auch verschiedene der erwähnten Erfassungs- und Erkennungsmöglichkeiten aufweisen und miteinander kombinieren. So kann das Verfahren beispielsweise eine Erfassung und Erkennung der Rohrleitungseigenschaften aufweisen, die auf die Ermittlung eines Ultraschallwerts und eines Widerstandswerts eines Messgeräts beruhen oder eine andere Kombination wie auch alle Varianten in Kombination sind denkbar.

Vorzugsweise werden zur Eruierung der Parameter die erfassten Eigenschaften, vorzugsweise Geometriedaten mit den in einem Datenspeicher hinterlegten Eigenschaften verglichen und die den Eigenschaften zugewiesenen Parameter an eine Steuereinheit der Ultraschalmessvorrichtung ausgegeben. Durch diese Parameter kann sich die erfindungsgemässe Vorrichtung entweder autonom justieren oder wird von Bedienpersonal entsprechend eingestellt.

Als vorteilhaft hat sich gezeigt, wenn die hinterlegten Eigenschaften mit den entsprechenden Parametern auf einem externen Server abgelegt sind und/oder in einem Speicher der erfindungsgemässen Vorrichtung, wobei zur Aktualisierung der Eigenschaften und Parameter ein Datenaustausch zwischen Server und dem Speicher der Vorrichtung stattfindet. Dies gewährleistet, dass die Daten immer auf dem aktuellsten Stand sind.

Als bevorzugte Ausgestaltung hat sich gezeigt, wenn das Optimieren der Einstellung der Ultraschallvorrichtung aufgrund der Parameter autonom erfolgt und/oder die Werte zur Optimierung der Einstellung der Ultraschallvorrichtung über eine Anzeigevorrichtung an den User ausgegeben werden. Bei einer autonomen Einstellung der erfindungsgemässen Vorrichtung liegt der Vorteil darin, dass keine menschlichen Fehler beim genauen Justieren erfolgen können, jedoch benötigt die Vorrichtung einen Antrieb zur autonomen Positionierung der Ultraschallwandler.

Es ist zudem die Aufgabe der Erfindung eine Vorrichtung vorzuschlagen, die ermöglicht die Rohrleitungen auf denen die Vorrichtung befestigt wird autonom zu erkennen.

Diese Aufgabe wird erfindungsgemäss auch dadurch gelöst, dass die Clamp-on Ultraschallmessvorrichtung zum autonomen Erkennen und Erfassen der Eigenschaften der Rohrleitung ein Potentiometer, ein Umfangsmessband und/oder mindesten einen weiteren Ultraschallwandler aufweist.

Die erfindungsgemässe Clamp-on Ultraschallmessvorrichtung für eine Rohrleitung beinhaltend, ein Gestell zur Anordnung der Clamp-on Ultraschallmessvorrichtung an einer Rohrleitung und zur Befestigung weiterer Elemente, mindestens zwei sich entlang der Rohrleitung in einer Ebene oder diagonal gegenüberliegende Ultraschallwandler zur Durchflussmessung, eine Steuereinheit, einen Speicher und eine Kommunikationseinheit. Die Clamp-on Ultraschallmessvorrichtung beinhaltet zum autonomen Erkennen und Erfassen der Eigenschaften, vorzugsweise der Geometrie der Rohrleitung ein Potentiometer, ein Umfangsmessband und/oder mindesten einen weiteren Ultraschallwandler.
Die erfindungsgemässe Ultraschallmessvorrichtung zur Durchflussmessungen in Rohrleitungen ermöglicht das erfindungsgemässe Verfahren zur Konfiguration der erfindungsgemässen Vorrichtung. Dies kann wie bereits erwähnt mittels eines Potentiometers, Umfangsmessbands und/oder eines weiteren Ultraschallwandlers erfolgen, die die Geometrie der Rohrleitung erfassen und dadurch die Parameter eruieren.

Vorzugsweise weist die erfindungsgemässe Ultraschallmessvorrichtung einen Antrieb zur Justierung der Ultraschallwandler auf. Dies ermöglicht eine autonome Einstellung der Vorrichtung.

Vorzugsweise ist das Umfangsmessband am Gestell angeordnet und dient auch zur Fixierung an der Rohrleitung.

Alle Ausgestaltungmöglichkeiten sind untereinander frei kombinierbar sowie die erwähnten Merkmale im Verfahren auch auf die Vorrichtung anwendbar sind und umgekehrt.

## Patentansprüche

1. Verfahren zur Konfiguration einer Clamp-on Ultraschallmessvorrichtung zur Durchflussmessung in Rohrleitungen, wobei die Clamp-on Ultraschallmessvorrichtung mindestens zwei sich entlang der Rohrleitung in einer Ebene oder diagonal gegenüberliegende Ultraschallwandler zur Durchflussmessung aufweist, beinhaltend:
• Manuelles Anbringen der Ultraschallmessvorrichtung an einem Rohrleitungsaussendurchmesser,
• Autonomes Erkennen und Erfassen der Eigenschaften der Rohrleitung gegenüber der Ultraschallmessvorrichtung
• Eruieren von Parametern zur exakten Konfiguration der Ultraschallmessvorrichtung anhand der erkannten Eigenschaften der Rohrleitung,
• Optimieren der Einstellung der Ultraschallvorrichtung aufgrund der ermittelten Parameter,
**dadurch gekennzeichnet, dass** das autonome Erfassen und Erkennen der Eigenschaften der Rohrleitung mittels eines ermittelten Widerstandswerts aufgrund der Dimension der Rohrleitung und/oder einer Umfangsmessung der Rohrleitung und/oder eines ermittelten Ultraschallwerts erfolgt.

2. Verfahren nach Anspruch 1, **dadurch gekennzeichnet, dass** zur Ermittlung des Widerstandswerts aufgrund der Dimension der Rohrleitung ein Potentiometer eingesetzt wird.

3. Verfahren nach Anspruch 1, **dadurch gekennzeichnet, dass** die Umfangmessung mittels eine Umfangmessbands durchgeführt wird.

4. Verfahren nach Anspruch 1, **dadurch gekennzeichnet, dass** zur Ermittlung des Ultraschallwerts mindestens ein Ultraschallwandler eingesetzt wird.

5. Verfahren nach einem der Ansprüche 1 bis 4 **dadurch gekennzeichnet, dass** das autonome Erkennen und Erfassen der Eigenschaften die Geometriedaten der Rohrleitung erfasst, vorzugsweise den Aussendurchmesser, Innendurchmesser und/oder die Wandstärke der Rohrleitung, wobei vorzugsweise ein zusätzlicher Ultraschallwandler dazu eingesetzt wird neben den bereits vorhandenen Ultraschallwandlern.

6. Verfahren nach einem der Ansprüche 1 bis 5, **dadurch gekennzeichnet, dass** zur Eruierung der Parameter die erfassten Eigenschaften mit den in einem Datenspeicher hinterlegten Eigenschaften verglichen und die den Eigenschaften zugewiesene Parameter an eine Steuereinheit der Ultraschallmessvorrichtung ausgegeben werden.

7. Verfahren nach einem der Ansprüche 1 bis 6, **dadurch gekennzeichnet, dass** die hinterlegten Eigenschaften mit den entsprechenden Parametern auf einem externen Server abgelegt sind und/oder in einem Speicher der Ultraschallvorrichtung, wobei zur Aktualisierung der Eigenschaften und Parameter ein Datenaustausch zwischen Server und Speicher der Ultraschallvorrichtung stattfindet.

8. Verfahren nach einem der Ansprüche 1 bis 4, **dadurch gekennzeichnet, dass** das Optimieren der Einstellung der Ultraschallvorrichtung autonom erfolgt und/oder die Werte zur Optimierung der Einstellung der Ultraschallvorrichtung über eine Anzeigevorrichtung an den User ausgegeben werden.

9. Clamp-on Ultraschallmessvorrichtung zur Durchführung des Verfahrens gemäss einem der Ansprüche 1 bis 8 für eine Rohrleitung beinhaltend, ein Gestell zur Anordnung der Clamp-on Ultraschallmessvorrichtung an der Rohrleitung und zur Befestigung weitere Elemente, mindestens zwei sich entlang der Rohrleitung in einer Ebene oder diagonal gegenüberliegende Ultraschallwandler zur Durchflussmessung, eine Steuereinheit, einen Speicher und eine Kommunikationseinheit, **dadurch gekennzeichnet, dass** die Clamp-on Ultraschallmessvorrichtung zum autonomen Erkennen und Erfassen der Eigenschaften der Rohrleitung ein Potentiometer, ein Umfangsmessband und/oder mindestens einen weiteren Ultraschallwandler aufweist.

10. Clamp-on Ultraschallmessvorrichtung nach Anspruch 9, **dadurch gekennzeichnet, dass** die Ultraschallvorrichtung einen Antrieb zur Justierung der Ultraschallwandler aufweist.

11. Clamp-on Ultraschallmessvorrichtung nach einem der Ansprüche 9 oder 10, **dadurch gekennzeichnet, dass** das Umfangsmessband am Gestell angeordnet ist und auch zur Fixierung an der Rohrleitung dient.
